# EUROPEAN PATENT SPECIFICATION

(11) **EP 1 304 418 B1**
(45) Date of publication and mention of the grant of the patent: **13.06.2007**
(21) Application number: 00949497.2
(22) Date of filing: 27.07.2000
(51) Int. Cl.: E04B 1/19

(54) **NODE FOR THREE-DIMENSIONAL OR TREELIKE STRUCTURES**
KNOTEN FÜR DREIDIMENSIONALE ODER BAUMÄHNLICHE STRUKTUREN
NOEUD POUR STRUCTURES TRIDIMENSIONNELLES OU ARBORESCENTES

(43) Date of publication of application: 23.04.2003
(73) Proprietor: Odriozola Espinosa de los Monteros, Ignacio, 2004 San Sebastian(Guipuzcoa) (ES)
(72) Inventor: Odriozola Espinosa de los Monteros, Ignacio, 2004 San Sebastian(Guipuzcoa) (ES)
(74) Representative: Carpintero Lopez, Francisco
(86) International application number: PCT/ES2000/000278
(87) International publication number: WO 2002/012646

(56) References cited:
- EP-A- 0 359 894
- WO-A-00/22248
- DE-U- 8 905 762
- FR-A- 2 526 890
- US-A- 3 563 581
- US-A- 4 904 108

## Description

### OBJECT OF THE INVENTION

The present invention relates to a knot which is specifically designed to constitute the point of union of several bars or sections which together form a grid-like or three-dimensional structure, in which the components of the structure are suitably embedded in each other to the extent which may vary as desired, with a quick and simple attachment and a high mechanical strength, all of this providing a great structural simplicity and a simple practical embodiment.

The knot of the invention can be applied in any practical case which requires a three-dimensional or tree-like structure, such as in the support structure for a roof, the structure of a multiple lamp, the structure of a display case, etc.

In general, the knot is applicable to any practical case where a plurality of long elements, either solid or tubular, of any material and with straight, bent or curved shapes must meet at one point and joined to each other with the bars being embedded in the knot to different extents.

### BACKGROUND OF THE INVENTION

Knots for three-dimensional structures are known which have the form of a spherical or polyhedral body and in which a number of blind threaded orifices, arranged either radially or perpendicularly to their faces so that in these orifices the bars of the structure are screwed in a butt joint (cf. FR-A-2 526 890). For the purposes of calculation and embodiment most of these knots act as jointed at the knot.

This type of grid-like joints, generally hinged or embedded by welding, are structurally complex and therefore expensive to construct, with elements in them which work subject to shearing stress, particularly threaded stems at the end of the bars that penetrate in the blind orifices of the knot; in addition the knot and the bars of the structure are elements having special characteristics which must be made specifically for the grid-like joint provided for the same, which naturally also increases the overall cost, considerably increasing the price of the final product since, as mentioned above, not only do the knots have a structure specific to their purpose but also the bars or structural elements which meet at the knot must have special characteristics complementary to those to the knot, not allowing the ready use of sections or bars available in the market.

### DESCRIPTION OF THE INVENTION

The knot of the invention solves the different aspects of the aforementioned drawbacks in a fully satisfactory manner.

For this purpose and more specifically, the characteristics of the knot are centred on a structure composed of two elements, one of which consists of two "U", omega or similarly shaped parts joined rigidly to each other with their concave faces opposite each other, and the second encasing the first or tubular and rigidly joined to "U", omega or similarly shaped parts and which may or may not fill the space defined between them, finally defining an assembly with two grooves of a rectangular or similar configuration, opposite and preferably offset 90° to each other, or in some cases 45°, which grooves also affect the encasing element by means of openings or slots made for this purpose in the latter.

The web or inner element is always obtained from two parts made of steel, aluminium, composite or other metals, preferably attached by welding, gluing, by a screw or a rod which goes through the whole part or by screws which cross part of the assembly; likewise, the encasing element can also be made of any material such as steel, aluminium, plastics, wood or any other material, and it may even be solid, so that it fills the entire space defined between the web and the outer part of the knot. This outer part of the knot can have any configuration, so that the knot may offer a generally prismatic-quadrangular or prismatic-polygonal aspect, among others, as long as it has the two aforementioned grooves, which grooves can be identical or different from each other in their shape and size.

Similarly, the encasing element can be a tubular section obtained by extrusion, or by way of a suitably rolled and folded laminar body.

Although it has been stated above that the two grooves defined by the two parts of the inner web are offset 90° to each other, with this being one of the most common arrangements, these grooves can also from any angle to each other, depending on the specific requirements of each case and without this affecting at all the essence of the invention.

The assembly formed by the two aforementioned elements can in turn define pathways in which other bars are inserted or which are run through by screws serving for different purposes.

The aforementioned grooves can optionally converge towards their base, so that the attachment of the bars is performed or enhanced by a wedging at the lateral insertion of the bar in its housing.

The knot may constitute a spatial element which is related only to the bars which meet at the knot, or it can be inserted in a wall or base to act as the way of joint for the tree-like structure to said wall or with the "tree-like" structure supporting a wall to get, for example, a curtain wall.

### DESCRIPTION OF THE DRAWINGS

To complement the description being made and in order to aid a better understanding of the characteristics of the invention, in accordance with a preferred embodiment, a set of accompanying drawings are provided as an integral part of the description in which for purposes of illustration only and in a non-limiting manner the following is shown:
Figure 1 is a perspective, elevation and profile view of the inner element of a knot for three-dimensional or tree-like structures made in accordance with the object of the present invention.
Figure 2 is a perspective exploded view of the elements which make up said knot, which exploded view also includes its inner web and showing the possible orifice for passage of a securing pin or bar.
Figure 3 is also a perspective view of the same assembly of the previous figure, duly assembled.
Figure 4 is a set of sectional views of alternate embodiments of the two internal parts which participate in the assembly of the previous figure and which constitute the web of the knot.
Figure 5 is another embodiment of the parts of the previous figure, by means of which the knot is made from only two parts and fewer joints.

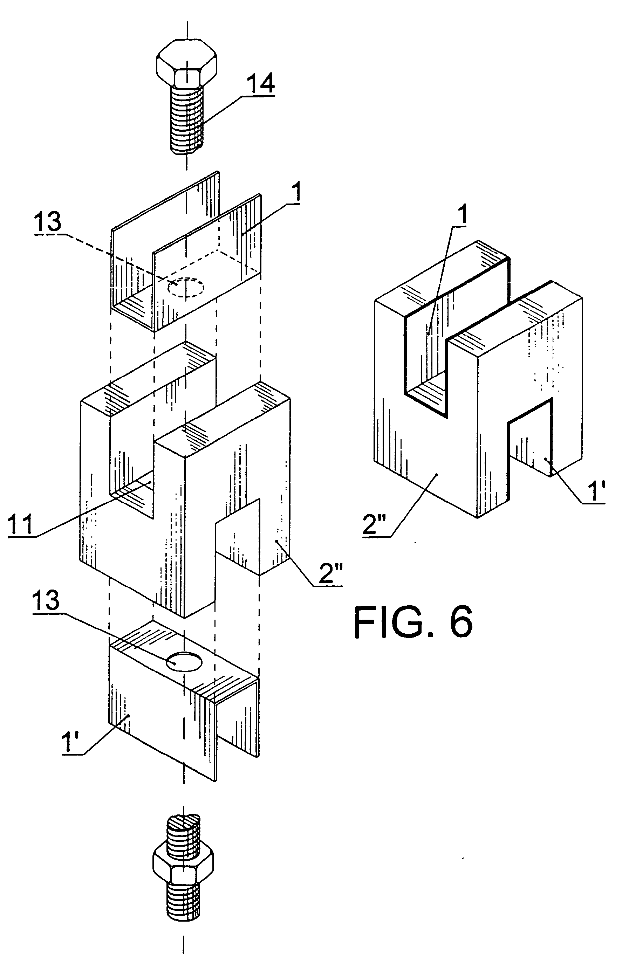

Figure 6 is a perspective exploded view of the knot in which the encasing element is made from a solid or compact body in which the U-parts forming the core web are housed.

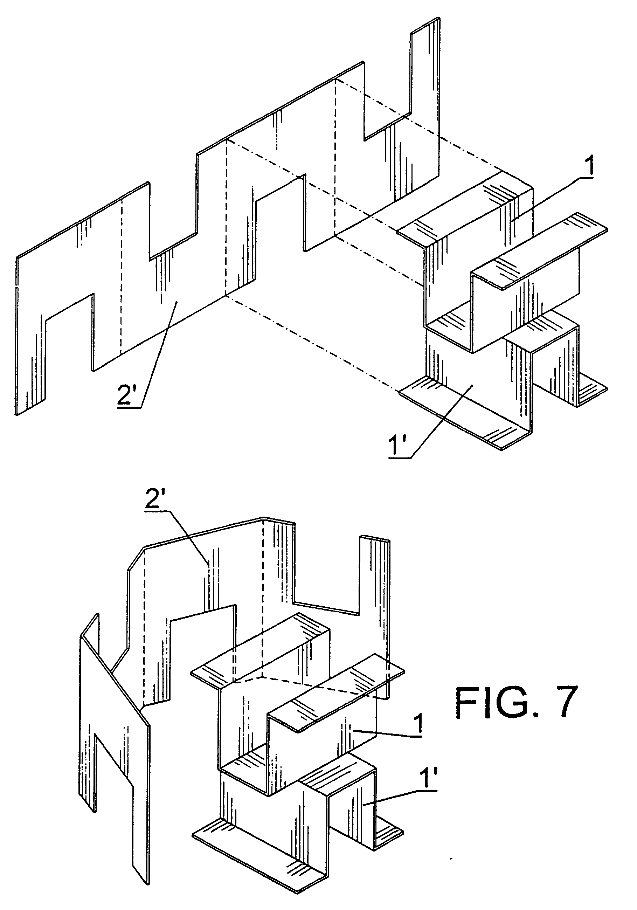

Figure 7 is another perspective exploded view similar to the previous figure, corresponding here to an embodiment in which the encasing element is obtained from a laminar body.
Figure 8 is a perspective view of an alternate embodiment of the knot in which the same is apt to receive sections or bars in places other than the normal grooves.
Figure 9 is a side elevation view showing a detail in which the knot acting as a element to join a three-dimensional structure to a wall or facade, to form by example a curtain wall.
Figure 10 shows an example of an embodiment of a three dimensional structure with the knot of the invention.

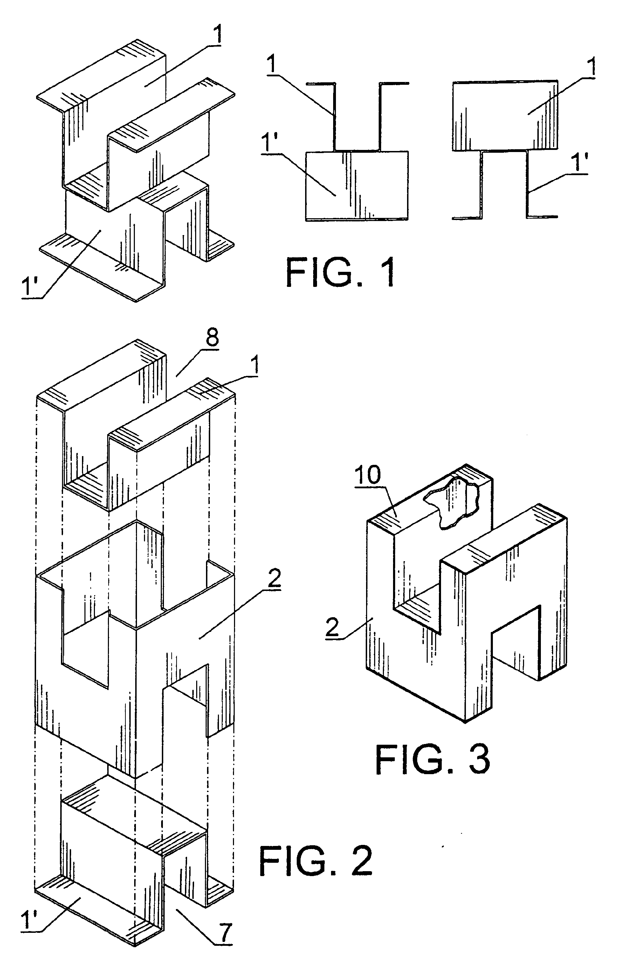

Figure 1 shows several ways of joining bars to a knot by welding or gluing, using a main rod and a nut or by cross rods.

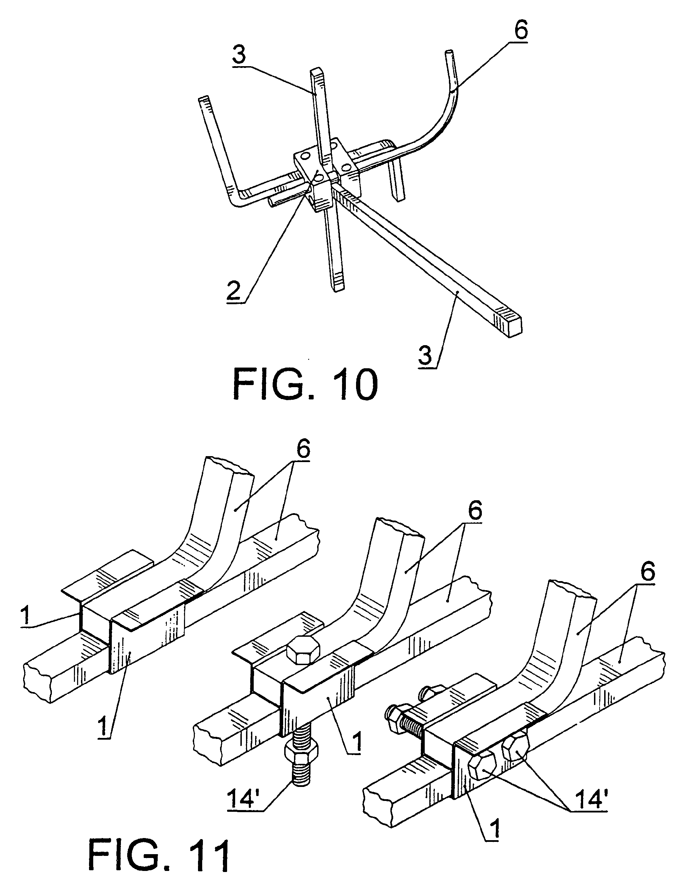

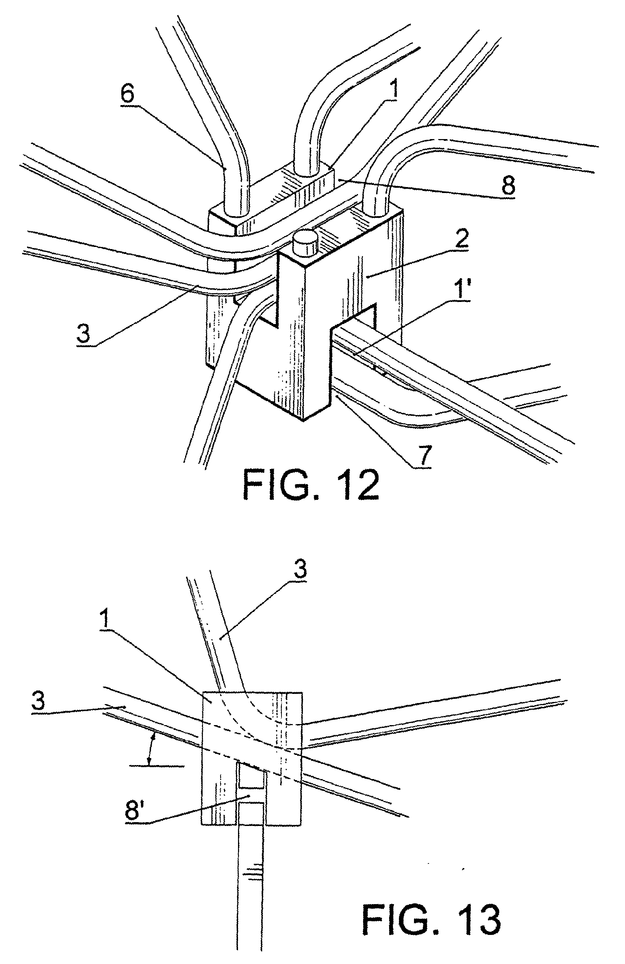

Figure 12 is a perspective view similar to that of figure 10 of a different example of embodiment of a three-dimensional structure with the knot of the invention, having bars with a circular cross section that can swivel or rotate about themselves inside the knot.
Figure 13 is a side elevation view of another embodiment of the knot in which the bars can adopt any dip, in opposition to the perpendicular arrangement of the previous figures.

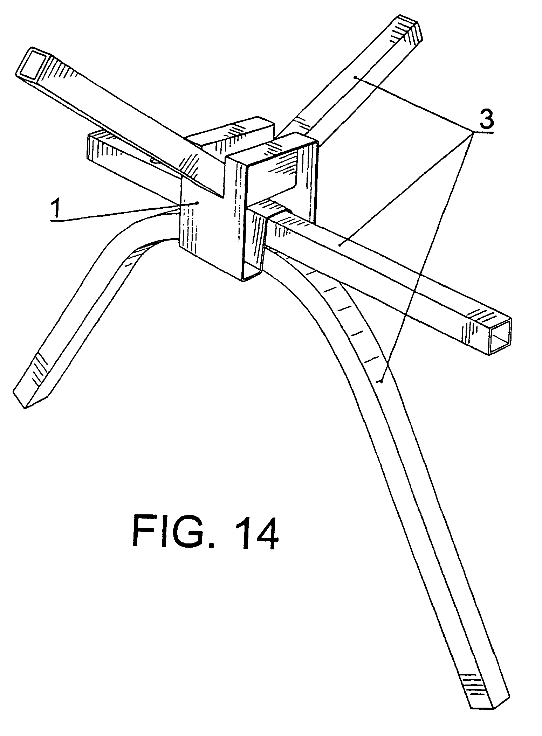

Figure 14 is finally, another example of an embodiment of the according to the invention, also in a perspective view.

### PREFERRED EMBODIMENT OF THE INVENTION

Regarding the above-mentioned figures, it can be appreciated the way the knot of the invention is made according to a preferred embodiment, by way of the functional combination of two elements: an inner web composed of two parts (1 - 1'), preferably having an "omega"-shaped cross-section, which are attached to each other with their concave faces facing each other, by gluing, welding or by a pin or screw that run through them and presses them together as well as securing the bars, with this attachment of the parts (1-1') preferably arranged perpendicularly to each other, although they can assume any other angle, and in which the parts can also have a U profile, said web in combination with an encasing element (2), of tubular configuration.

In any case the grooves defined in the web (1), specifically in the parts (1 - 1') which constitute the same and which naturally will end in corresponding notches of the encasing element (2), will be suitably sized so that their thickness, length and width may change to receive inside them, by way of fitting, one of the bars (3) which forms part of the three-dimensional or tree-like structure.

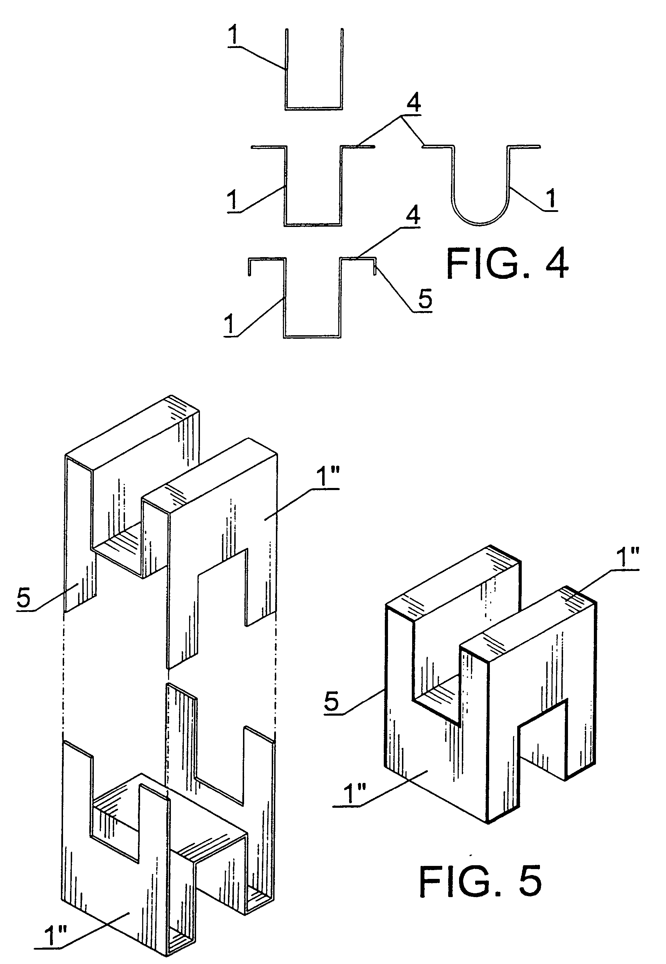

The aforementioned parts (1 - 1') with an "omega" configuration can optionally have an intermediate U-form which extends as lateral and opposing wings (4), which may further be provided with orthogonal end elbows (5) as shown in figure 5, so that in any case the inner element or core (1) has to be fitted into the encasing part (2), which in turn will adopt a tubular configuration sized accordingly to receive the web (1-1').

The free spaces left by the parts (1 - 1') forming the web inside the encasing element (2) maybe used to insert other bars (6), screws or other elements after the corresponding through orifices are made.

In any event the encasing part (2) shall have notches (7) which are adequate in shape, size and location with the ends of the grooves (8) defined in the parts (1 - 1') of the web after its implantation in the encasing element (2), so that said grooves (8) are left outwardly open on both ends, allowing the bars (3) to be coupled inside them.

The knot can also be formed from a part (1") as shown in figure 5. In this case the two parts form the web and the encasing element, with the two parts joined at least at the base of their corresponding grooves.

Another structural embodiment for the knot relies on the use of parts (1-1') with a cross section in "U" to form the web, which once joined are included or even embedded inside of one encasing element (2"), which in this case is in the form of a solid part provided with two large opposing grooves, and by example perpendicular to each other, directly connected by their mid area and with a size and shape to adequate to parts (1-1') with a configuration in "U", which can be integral to each other through the opening (11) which communicates both grooves and through which may pass a securing bar. In this latter case and preferably, the grooved parts (1-1') will be fully integral to each other in their final assembly position inside the knot to form the web of the knot, which when duly housed inside an injection mould will participate in the final form of the knot, injecting in said mould a plastic material to form the solid encasing body (2") of the knot.

As indicated in the previous paragraph, the web formed by the parts (1-1') can be embedded within a compact or solid mass, such as one of plastic material. The final configuration of the knot can be obtained by example injecting the plastic material over metal web.

The attachment of the inner parts (1-1') which constitute the web to each other as the latter to the encasing piece (2) can be by means of welding, gluing or by a pin which run from top to bottom through to attach several bars to the knot, so that the base of the grooves (8), that is of the two parts (1-1') of the web, can be in direct contact with each other, as shown in figure 1.

On the other hand, said grooves (8) defined in the knot and which may be at any angle to each other can in turn have a regular rectangular or square section, as shown in the figures, or be slightly converging towards their base in order to allow a wedge effect when assembling inside the same the corresponding bar (3), which in some cases may consist of the final attachment means of the bar to the knot or may be a complementary means of attachment enhanced by screws, rivets, welding etc.

In addition, the knot as a whole may have a rectangular-prismatic shape as shown in the figures or have any other polygonal prismatic shape, this not affecting its essential characteristics, nor as a result the essence of the invention.

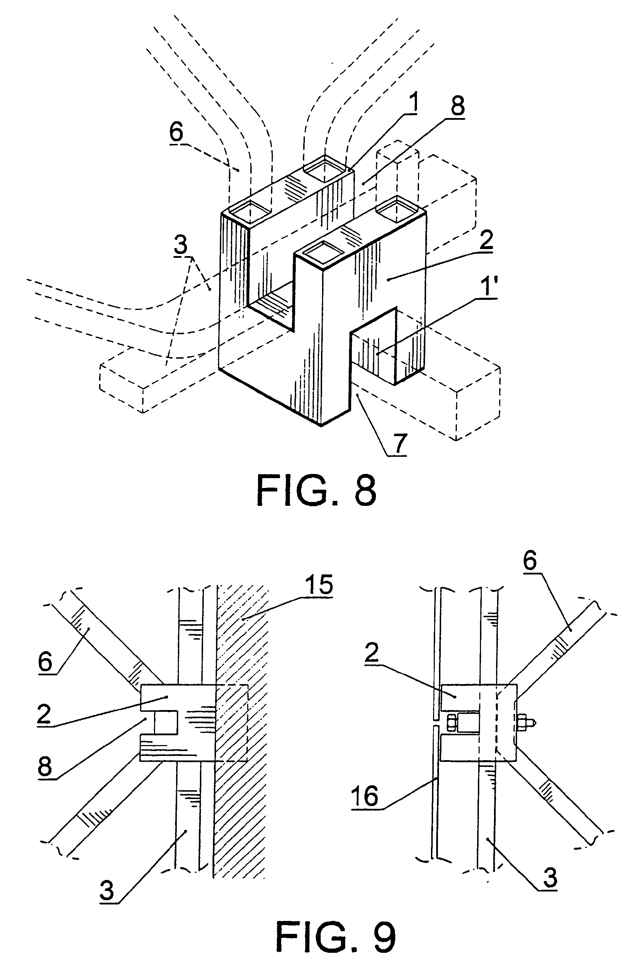

According to the described structure the knot is capable of making converge a plurality of bars or like elements with similar or differing sections, lengths, paths, made of totally different materials, etc. allowing to obtain the most fanciful three-dimensional or tree-like structures, as shown in the examples of figures 10, 12 and 14, all of this with a high degree of mechanical strength at the level of said knots of confluence between bars, the knot at the same time could form the attachment means of the structure to a wall (15), as shown in figure 9, or with said structure (6) by means of the knots (2) constitute the support for a curtain wall (16) as shown also in said figure 9.

Figure 11 shows different forms of joining the bars (6) to each other, which can be welded both to each other as to the part (1) or bonded by an adhesive, or by the use of screws (14') placed on the general plane of the knot or transverse to it.

Also considered is the possibility shown in figure 12, in which the bars (3-6) have a circular cross section so that, when are implanted in the grooves (7-8) of the knot or by crossing various orifices in the body of the same, they may rotate about themselves to provide a structure that can be folded for transportation and which is finally assembled on site, simply by turning the bars to make the structure to open until it reaches its final working arrangement.

The detail of figure 13 shows a knot in which its component parts (1) include grooves (8') at a certain angle other than 90°, so that the bars (3) can adopt several orientations, and therefore allowing any orientation desired.

Additionally, several advantages are derived from the described structure which are mainly centred on the following aspects:
- A high degree of strength of the bars against both at shearing and bending stresses, with a low material weight, by the fact that the bars are embedded.
- A reduced cross section of the bars, as they are embedded inside the knot.
- Adjustable embedding in the knot, thereby allowing to adjust the tightening in several directions and orientations.
- The possibility of being made of simple, market-available, parts, such as omegas, which allow to obtain them by extrusion or rolling stiff knots with very small tolerances, which tolerances can be absorbed when forming the knot.
- By varying the shape, size and thickness of the inner parts or of the outer tube it is possible to obtain knots with very different mechanical characteristics and very different degree of embedment.
- It is possible to get bars embedded in the knot using screws, adhesives, by pressure, welding or by splices of the knot and screws, which allows to embed in the same knot bars of different materials, such as steel, aluminium, composites, wood, etc.
- It allows to make embeddings that can be disassembled.
- It allows to assemble the bars by simple wedging.
- It allows to embed the knot in a wall.
- It allows to support a glass wall tied to the knots.
- The spaces defined inside the knot between the inner and parts and the encasing parts can be filled with concrete, polyurethane, plastic, etc. in order to increase the stiffness of the knot.

## Claims

1. Knot for three-dimensional or tree-like structures, of the type meant to constitute the means of joint between bars or tubes of different nature and with different trajectories, **characterised in that** the knot is formed by a functional arrangement of two elements, an inner web formed by two parts (1 - 1') having a grooved configuration, and an external encasing element (2) having a tubular configuration and having walls provided with grooves in correspondence with the ends of the grooves of the parts (1-1'), in order to receive within them the corresponding bars (3) which form the structure.

2. Knot for three-dimensional or tree-like structures, as claimed in claim 1, **characterised in that** the inner parts (1 - 1') which define the web can optionally have an "omega"-shaped cross-section, with a U-shaped central segment that is projected as flaps (4) which bend orthogonally outwards in correspondence with the free ends of their side wings, and which flaps can also end in flanges (5) which are in turn bent in the same direction and with a length that may even match the axial length of the encasing element (2), acting as reinforcement means for said encasing element.

3. Knot for three-dimensional or tree-like structures, as claimed in any preceding claim, **characterised in that** said inner parts (1 - 1') which form the core of the knot are attached directly to each other by one or more traversing pins, by welding, adhesive or any other conventional means, whether directly or with the aid of an intermediate body acting as a spacing element.

4. Knot for three-dimensional or tree-like structures, as claimed in any preceding claim, **characterised in that** the encasing element (2) can be obtained from a conveniently cut tubular section or from a die folded sheet into said tubular configuration.

5. Knot for three-dimensional or tree-like structures, as claimed in claims 1 to 4, **characterised in that** the two parts (1") which form the core, from a simple "omega"-shaped section, incorporate wide lateral and parallel extensions provided with corresponding rectangular grooves sized and shaped to match their central "U" segment, so that these extensions (5) of said parts (1") comprise the encasing element of the core.

6. Knot for three-dimensional or tree-like structures, as claimed in any preceding claim, **characterised in that** the grooves (8) defined in the knot and which preferably have a rectangular section may have a section (8') which converges slightly towards their base, in order to allow the attachment of the bars (3) by wedging them inside, with or without using additional attachment means.

7. Knot for three-dimensional or tree-like structures, as claimed in any preceding claim, **characterised in that** the empty space defined between the encasing element (2) and the inner web (1 - 1') may be filled with any filler material or left empty, in which case the flaps (4) that frame the grooves (8) of the web will incorporate orifices for inserting further bars (6), screws or other elements.

8. Knot for three-dimensional or tree-like structures, as claimed in claims 1 to 6, **characterised in that** the inner web (1-1') made from two U-shaped parts suitably secured to each other is inserted in a solid encasing element (2"), preferably obtained by injecting plastic material in a mould of a suitable configuration to the external geometry intended for the knot, and inside which is housed the metal web prior to the injection.

9. Knot for three-dimensional or tree-like structures, as claimed in any preceding claim, **characterised in that** the assembly formed by the web or inner element (1) and the encasing element (2), which may be attached by welding, adhesive or any other conventional means, and formed from parts in which the web and the encasing element may be made from any material, but with the web and the encasing element made from different materials, constitute a prismatic-polygonal prism body with any number of faces.

## Patentansprüche

1. Knotenstück für dreidimensionale oder baumartige Strukturen der Bauart, die die Verbindungseinrichtung zwischen Stäben oder Rohren unterschiedlicher Art und mit unterschiedlichen Trajektorien bilden soll, **dadurch gekennzeichnet, dass** das Knotenstück durch eine funktionelle Anordnung von zwei Elementen gebildet ist, einem inneren Stegprofil, das durch zwei Teile (1-1') gebildet ist, die eine Nut-Konfiguration haben, und einem äußeren Verkleidungselement (2), das eine rohrförmige Konfiguration hat und Wände hat, die mit Nuten in Übereinstimmung mit den Enden der Nuten der Teile (1-1') versehen sind, um darin die entsprechenden, die Struktur bildenden Stäbe (3) aufzunehmen.

2. Knotenstück für dreidimensionale oder baumartige Strukturen nach Anspruch 1, **dadurch gekennzeichnet, dass** die inneren Teile (1-1'), die das Stegprofil bilden, optional einen "Omega"-förmigen Querschnitt mit einem U-förmigen Mittelabschnitt haben, der in Form von Streifen (4) fortgeführt ist, die in Übereinstimmung mit den freien Enden ihrer seitlichen Flügel orthogonal nach außen gebogen sind, welche Streifen auch in Flanschen (5) enden können, die wiederum mit einer Länge in dieselbe Richtung gebogen sind, die sogar der axialen Länge des Verkleidungselements (2) entsprechen kann, und als Verstärkungseinrichtung für das Verkleidungselement wirken.

3. Knotenstück für dreidimensionale oder baumartige Strukturen nach einem der vorstehenden Ansprüche, **dadurch gekennzeichnet, dass** die inneren Teile (1-1'), die den Kern des Knotenstücks bilden, durch einen oder mehrere durchgehende Bolzen, durch Verschweißen, Klebstoff oder eine beliebige andere herkömmliche Einrichtung direkt aneinander angebracht sind, sei es direkt oder mit Hilfe eines als Abstandselement wirkenden Zwischenkörpers.

4. Knotenstück für dreidimensionale oder baumartige Strukturen nach einem der vorstehenden Ansprüche, **dadurch gekennzeichnet, dass** das Verkleidungselement (2) aus einem günstig geschnittenen Rohrabschnitt oder aus einem im Formwerkzeug zu der rohrförmigen Konfiguration gebogenen Blech erhalten werden kann.

5. Knotenstück für dreidimensionale oder baumartige Strukturen nach Anspruch 1 bis 4, **dadurch gekennzeichnet, dass** die beiden Teile (1"), die den Kern bilden, von einem einfachen "Omega"-förmigen Profil breite seitliche und parallele Erweiterungen umfassen, die mit entsprechenden rechteckigen Nuten versehen sind, die so dimensioniert und geformt sind, dass sie mit ihrem zentralen "U"-Segment übereinstimmen, so dass diese Erweiterungen (5) der Teile (1") das Verkleidungselement des Kerns enthalten.

6. Knotenstück für dreidimensionale oder baumartige Strukturen nach einem der vorstehenden Ansprüche, **dadurch gekennzeichnet, dass** die in dem Knotenstück gebildeten Nuten (8), die vorzugsweise einen rechteckigen Querschnitt haben, einen Querschnitt (8') haben können, der zu ihrer Basis hin geringfügig konvergiert, um die Anbringung der Stäbe (3) durch Verkeilen derselben im Inneren mit oder ohne die Verwendung von zusätzlichen Befestigungseinrichtungen zu ermöglichen.

7. Knotenstück für dreidimensionale oder baumartige Strukturen nach einem der vorstehenden Ansprüche, **dadurch gekennzeichnet, dass** der zwischen dem Verkleidungselement (2) und dem inneren Stegprofil (1-1') gebildete leere Raum mit einem beliebigen Füllmaterial gefüllt sein kann oder leer bleiben kann, in welchem Fall die Streifen (4), die die Nuten (8) des Stegprofils umrahmen, Öffnungen zum Einführen von weiteren Stäben (6), Schrauben oder anderen Elementen enthalten.

8. Knotenstück für dreidimensionale oder baumartige Strukturen nach Anspruch 1 bis 6, **dadurch gekennzeichnet, dass** das aus zwei in geeigneter Weise aneinander befestigten U-förmigen Teilen gebildete innere Stegprofil (1-1') in ein massives Verkleidungselement (2") eingeführt wird, das vorzugsweise durch Einspritzen von Kunststoffmaterial in ein Formwerkzeug mit einer geeigneten Konfiguration für die für das Knotenstück vorgesehene äußere Geometrie erhalten wird, in welchem das Metall-Stegprofil vor dem Einspritzen untergebracht ist.

9. Knotenstück für dreidimensionale oder baumartige Strukturen nach einem der vorstehenden Ansprüche, **dadurch gekennzeichnet, dass** die von dem Stegprofil oder inneren Element (1) und dem Verkleidungselement (2) gebildete Anordnung, die durch Verschweißen, Klebstoff oder jede andere herkömmliche Einrichtung befestigt sein kann und aus Teilen gebildet sein kann, bei welchen das Stegprofil und das Verkleidungselement aus einem beliebigen Material hergestellt sein können, wobei jedoch das Stegprofil und das Verkleidungselement aus verschiedenen Materialien hergestellt sind, einen prismatisch-polygonalen Prismenkörper mit einer beliebigen Anzahl von Flächen bildet.

## Revendications

1. Noeud pour structures tridimensionnelles ou arborescentes du type signifié pour constituer le moyen d'articulation entre des barres ou des tubes de natures différentes et ayant des trajectoires différentes, **caractérisé en ce que** le noeud est formé par un agencement fonctionnel de deux éléments, une bande interne formée par deux parties (1 - 1') ayant une configuration rainurée, et un élément d'emboîtage externe (2) ayant une configuration tubulaire et possédant des parois dotées de rainures en correspondance avec les extrémités des rainures des parties (1 - 1'), afin de recevoir en leur intérieur les barres correspondantes (3) qui forment la structure.

2. Noeud pour structures tridimensionnelles ou arborescentes, selon la revendication 1, **caractérisé en ce que** les parties internes (1 - 1') qui définissent la bande peuvent facultativement avoir une coupe transversale en forme de « oméga », ayant un segment central en forme de U qui est prévu sous forme de volets (4) qui fléchissent orthogonalement vers l'extérieur en correspondance avec les extrémités libres de leurs ailes latérales, et lesquels volets peuvent également se terminer en brides (5) qui sont à leur tour fléchies dans la même direction et ayant une longueur qui peut même s'adapter à la longueur axiale de l'élément d'emboîtage (2), agissant comme moyen de renforcement pour ledit élément d'emboîtage.

3. Noeud pour structures tridimensionnelles ou arborescentes, selon l'une quelconque des revendications précédentes, **caractérisé en ce que** lesdites parties internes (1 - 1') qui forment le noyau du noeud sont attachées directement l'une à l'autre par une ou plusieurs goupilles traversantes, par soudage, adhésif ou tout autre moyen classique, que ce soit directement ou à l'aide d'un corps intermédiaire agissant comme élément de séparation.

4. Noeud pour structures tridimensionnelles ou arborescentes, selon l'une quelconque des revendications précédentes, **caractérisé en ce que** l'élément d'emboîtage (2) peut être obtenu à partir d'une section tubulaire coupée de manière commode ou à partir d'une feuille pliée par matrice en ladite configuration tubulaire.

5. Noeud pour structures tridimensionnelles ou arborescentes, selon les revendications 1 à 4, **caractérisé en ce que** les deux parties (1") qui forment le noyau, à partir d'une section en forme de « oméga » simple, incorporent de larges extensions latérales et parallèles dotées de rainures rectangulaires correspondantes dimensionnées et façonnées pour s'adapter à leur segment « U » central, de sorte que ces extensions (5) desdites parties (1") comprennent l'élément d'emboîtage du noyau.

6. Noeud pour structures tridimensionnelles ou arborescentes, selon l'une quelconque des revendications précédentes, **caractérisé en ce que** les rainures (8) définies dans le noeud et qui ont de préférence une section rectangulaire peuvent avoir une section (8') qui converge légèrement vers leur base, afin de permettre la fixation des barres (3) par leur coinçage à l'intérieur, avec ou sans utilisation de moyen de fixation additionnel.

7. Noeud pour structures tridimensionnelles ou arborescentes, selon l'une quelconque des revendications précédentes, **caractérisé en ce que** l'espace vide défini entre l'élément d'emboîtage (2) et la bande interne (1-1') peut être rempli de tout matériau de charge ou laissé vide, dans lequel cas les volets (4) qui encadrent les rainures (8) de la bande incorporeront des orifices destinés à insérer des barres supplémentaires (6), des vis ou d'autres éléments.

8. Noeud pour structures tridimensionnelles ou arborescentes, selon les revendications 1 à 6, **caractérisé en ce que** la bande interne (1 - 1') fabriquée à partir de deux parties en forme de U fixées de manière appropriée l'une à l'autre est insérée dans un élément d'emboîtage solide (2"), obtenu de préférence en injectant une matière plastique dans un moule de configuration appropriée à la géométrie externe prévue pour le noeud, et à l'intérieur duquel est logée la bande en métal avant l'injection.

9. Noeud pour structures tridimensionnelles ou arborescentes, selon l'une quelconque des revendications précédentes, **caractérisé en ce que** l'ensemble formé par la bande ou l'élément interne (1) et l'élément d'emboîtage (2), qui peut être attaché par soudage, adhésif ou tout autre moyen classique, est formé à partir des parties dans lesquelles la bande et l'élément d'emboîtage peuvent être fabriqués à partir de tout matériau, mais la bande et l'élément d'emboîtage étant fabriqués à partir de matériaux différents, constituent un corps de prisme polygonal prismatique ayant un nombre quelconque de faces.
